(19) Europäisches Patentamt
European Patent Office
Office européen des brevets

(11) EP 3 581 354 A1

(12) **EUROPEAN PATENT APPLICATION**
published in accordance with Art. 153(4) EPC

(43) Date of publication:
18.12.2019 Bulletin 2019/51

(51) Int Cl.:
B29B 11/16 (2006.01)     B29K 101/10 (2006.01)

(21) Application number: 18751263.7

(22) Date of filing: 07.02.2018

(86) International application number:
PCT/JP2018/004206

(87) International publication number:
WO 2018/147324 (16.08.2018 Gazette 2018/33)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 09.02.2017 JP 2017021926

(71) Applicant: Toray Industries, Inc.
Tokyo 103-8666 (JP)

(72) Inventors:
• TSUMURA, Yusuke
Nagoya-shi
Aichi 455-8502 (JP)
• HASHIMOTO, Masahiro
Nagoya-shi
Aichi 455-8502 (JP)

(74) Representative: Hoefer & Partner Patentanwälte
mbB
Pilgersheimer Straße 20
81543 München (DE)

(54) **PREFORM ELEMENT, PREFORM USING SAME, AND METHOD FOR PRODUCING SAME**

(57) This preform element is characterized by having a tucked portion in at least a portion of a prepreg composed of a reinforced fiber and a thermosetting resin. Provided are a preform element, a preform using the same, and a method for producing the same, wherein the preform element has excellent mechanical properties or filling characteristics with respect to a cavity and is effective in avoiding problems, such as fiber bridging or resin richness or warping, even when a three-dimensional form having thickness variations such as thick parts or projections is obtained through a press molding.

FIG. 2

(a)

(b)

(c)

(d)

**Description**

<u>Technical Field of the Invention</u>

Our invention relates to a preform element, a preform using the preform element, and a method for producing the preform made from a prepreg comprising reinforcing fibers and thermosetting resin to be subjected to a compression molding such as press forming. More specifically, our invention relates to a preform element, a preform using the preform element, and a method for producing the preform made from a prepreg, applicable to forming products, such as automobile structural members, aircraft members and sport tools, which are excellent in appearance quality and are capable of following complicated shapes of rib or boss to easily produce fiber-reinforced resin shaped products provided with a thick part or a projection having a thickness change.

<u>Background Art of the Invention</u>

Fiber-reinforced resins are applicable widely in industrial fields such as automobile and aircraft fields and in sport and leisure fields to produce fishing rods or golf club shaft because of its lightweight, high strength and high rigidity. Fiber-reinforced resin may be produced by using prepreg as an intermediate reinforcing fiber material comprising long fibers. Patent document 1 discloses a shaped product made of fiber-reinforced resin produced by laminating and forming a prepreg cut into a desired shape to be cured in a die.

Patent document 2 discloses a press molding process to form a shape with ribs by placing Sheet Mold Compound (SMC) only in a part having complicated shapes such as rib since a thickness-changing part should be made of material having a good filling characteristic.

<u>Prior art documents</u>

<u>Patent documents</u>

Patent document 1: JP2015-143343-A
Patent document 2: JP5950149-B

<u>Summary of the Invention</u>

<u>Problems to be solved by the Invention</u>

When the prepreg is cut into a desired shape to be laminated to form a preform arranged in an approximate shape of product and then is subjected to a conventional press molding as a compression molding in a die, the reinforcing fibers might stretch to fail to follow the shape at a thickness-changing part or a corner part although achieving a good productivity. Such a part might have a resin-rich area or an uneven thickness to deteriorate physical properties and design.

As well, when the prepreg is laminated to form a preform arranged in an approximate three-dimensional shape of product and then is subjected to a conventional compression molding, production of the preform might spend much time and cost.

On the other hand, when a shaped product is produced by pressing isotropic short fiber-reinforced resin material such as SMC excellent in fluidity placed only at a thickness-changing part, the product might have a problem, such as insufficient mechanical properties derived from mechanical properties of the short fiber-reinforced resin poorer than that of prepreg, and warpage caused by resin shrinkage derived from fiber content difference between prepreg and short fiber-reinforced resin material.

Therefore, it has been difficult to produce a product with a thickness-changing part while achieving both good production efficiency and good mechanical properties, even by using combination of materials having different formabilities.

From viewpoints of the above-described problems, it could be helpful to provide a preform element, a preform using the preform element, and a method for producing the preform which is excellent in mechanical properties and filling characteristics to cavity so that problems such as fiber bridging, resin-rich area and warpage can be prevented even when a three-dimensional shape having a thickness change such as thick part, projection or the like is produced by a press molding.

Means for solving the Problems

To solve the above-described problems, our preform element is a preform element having a tucked portion in a part of a prepreg comprising a reinforcing fiber and a thermosetting resin.

In our preform element, it is preferable that the prepreg has a portion of the reinforcing fiber which is partially cut.

In our preform element, it is preferable that a part of the tucked portion has a scroll structure.

In our preform element, it is preferable that a part of the tucked portion has a folded structure.

In our preform element, it is preferable that the reinforcing fibers are unidirectionally oriented in the tucked portion.

In our preform element, it is preferable that four or more layers of the prepreg are laminated in the tucked portion.

Further, our preform is a preform comprising: a preform element having a tucked portion in a part of a first prepreg comprising a reinforcing fiber and a thermosetting resin; and a second prepreg comprising a reinforcing fiber and a thermosetting resin, the preform element being provided at a position in a laminate of the second prepreg.

In our preform, it is preferable that at least one of the preform element is provided on a surface of the laminate of the second prepreg.

In our preform, it is preferable that at least a part of the preform element is covered by the laminate of the second prepreg.

In our preform, it is preferable that the laminate of the second prepreg has a three-dimensional shape.

In our preform, it is preferable that a mass (W1 [g]) of the laminate of the second prepreg is equal to or more than a mass (W2 [g]) of the preform element.

In our preform, it is preferable that a cure extent ($\alpha$1 [%]) of the laminate of the second prepreg is equal to or more than a cure extent ($\alpha$2 [%]) of the preform element.

In our preform, it is preferable that the cure extent ($\alpha$1 [%]) of the laminate of the second prepreg is 0.5% or more and 30% or less.

Furthermore, our method for producing a preform comprises a bonding step to attach a preform element having a tucked portion in a first prepreg comprising a reinforcing fiber and a thermosetting resin to a surface of a laminate of a second prepreg comprising a reinforcing fiber and a thermosetting resin.

It is preferable that our method for producing a preform further comprises a covering step to cover at least a part of the preform element by the laminate of the second prepreg.

It is preferable that our method for producing a preform further comprises a preliminary forming step to form the laminate of the second prepreg into a three-dimensional shape.

Effect according to the Invention

Our preform element can easily deform a tucked portion of prepreg into a three-dimensional shape by a press-forming pressure as specifically forming a thickness-changing shape such as thick part and projection, while the forming is well performed without defects.

Brief explanation of the drawings

[Fig. 1] Fig. 1 is a schematic plan view showing an example of our incised prepreg used for a preform element having a tucked portion.

[Fig. 2] Fig. 2 is a perspective view showing an example of our preform element having a tucked portion.

[Fig. 3] Fig. 3 is a schematic cross section view showing a structure example of a tucked portion of our preform element.

[Fig. 4] Fig. 4 is a perspective view showing an example of shaped product having a thickness change and comprising our preform element.

[Fig. 5] Fig. 5 is a perspective view showing a shape example of cavity of die used for producing a shaped product comprising our preform element.

[Fig. 6] Fig. 6 is a perspective view showing another shape example of cavity of die used for producing a shaped product comprising our preform element.

[Fig. 7] Fig. 7 is a perspective view showing a production method example of our preform element.

[Fig. 8] Fig. 8 is a schematic cross section view showing a cross section structure example of our preform element.

Embodiments for carrying out the Invention

Our invention is a preform element, a preform using the preform element and a producing method of the preform having a tucked portion of prepreg comprising reinforcing fiber and thermosetting resin. Hereinafter, examples of our invention will be explained.

[Preform element]

Our preform element comprises a prepreg consisting of reinforcing fiber and thermosetting resin.

(Reinforcing fiber)

The reinforcing fiber of the prepreg may be a continuous fiber. The continuous fiber means a fiber oriented continuously without interruption in the longitudinal direction of prepreg. The continuous fiber includes a fiber oriented continuously without interruption in the longitudinal direction from one end to the other end in a finite length of prepreg sheet.

The preform element of prepreg comprising continuous reinforcing fibers can achieve a high strength derived from fiber strength exhibited when a load is applied to the shaped product. The preform element of prepreg comprising continuous reinforcing fibers may be a unidirectional prepreg in which continuous fibers are unidirectionally oriented, a woven prepreg in which continuous fibers are woven, an impregnated prepreg in which a braiding of continuous fibers is impregnated with resin, or the like.

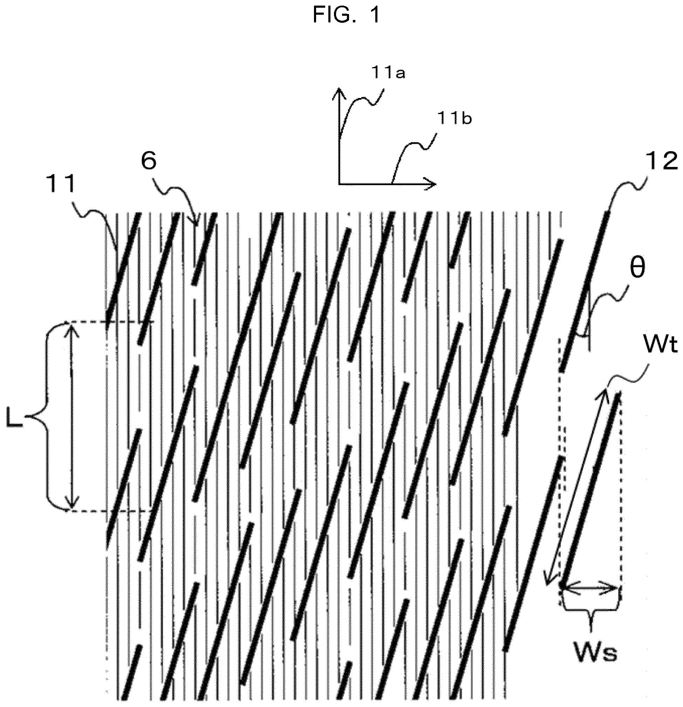

Fig. 1 shows an incised prepreg made by partially inserting a notch in the prepreg comprising continuous reinforcing fibers. Specifically, all reinforcing fibers 11 are substantively divided by notches 12 inserted intermittently in a direction crossing reinforcing fibers all over prepreg 6. From a viewpoint of mechanical properties, it is preferable that notches 12 are inserted in a unidirectional prepreg to make an incised prepreg. The incised prepreg can be used together with a prepreg comprising continuous reinforcing fibers to make a preform element.

The incised prepreg is one of desirable embodiment of our invention. This prepreg can enhance fluidity because an incised part is opened by flow at the compression forming to separate reinforcing fiber bundles to increase flexibility. From a viewpoint of fluidity, it is preferable that the incised part has a cross section passing through the prepreg in the thickness direction.

It is preferable that cut length L of reinforcing fiber included in the notch-included prepreg is 3 mm or more and 100 mm or less. It is preferably 5 mm or more and 75 mm or less, preferably 10 mm or more and 50 mm or less. Such a desirable range of length L of reinforcing fibers more than the lower level can make a shaped product have sufficient mechanical characteristics. On the other hand, such a desirable range of length L of reinforcing fibers less than the upper level can exhibit sufficient fluidity of preform element at the time of forming.

Although desirable cut length at the incised part depends on angle $\theta$ between the notch and main axis direction of reinforcing fiber in the prepreg, it is preferable that length Ws projected from the prepreg toward fiber orthogonal direction 11b of the reinforcing fiber of prepreg is 0.05 mm or more and 25 mm or less. It is preferable that length Ws is 0.1 mm or more and 10 mm, preferably 0.15 mm or more and 5 mm or less. Such a desirable range of cut length more than the lower limit can achieve sufficient fluidity of preform element while the incised part has a wider opening. On the other hand, the cut length of less than the upper limit can suppress the opening of the incised part to form shapes products excellent in appearance quality and mechanical characteristics.

It is preferable that the prepreg contains reinforcing fibers by a volume content of 40% or more and less than 80%. The volume content is preferably 45% or more and less than 75%, preferably 50% or more and less than 70%. As described above, the unidirectional prepreg and the incised prepreg are so excellent in filling efficiency of reinforcing fibers that the reinforcing fiber can exhibit reinforcing effect and shaped products can improve in rigidity.

It is preferable that the prepreg contains reinforcing fibers in a sheet by a basis weight of 50 gsm or more and less than 1,000 gsm. When the prepreg comprising small piece of reinforcing fiber or chopped fiber bundle as a precursor has an excessively small basis weight, the prepreg might have an in-plane void including no reinforcing fiber. The desirable range of basis weight of more than the lower limit can exclude voids as a weak point. The desirable range of basis weight of less than the upper limit can transfer heat uniformly inside at a preheating in a forming process. From viewpoints of both uniformities of structure and heat transfer, it is preferable that the basis weight is 100 gsm or more and less than 600gsm. It is preferably 150 gsm or more and less than 400 gsm. The basis weight of reinforcing fiber can be determined by measuring a mass of 10 cm square region cut from a sheet product of reinforcing fibers. The measurement is performed by 10 times at different parts of sheet product. The measured values are averaged to determine the basis weight of reinforcing fibers.

The prepreg may have a portion which is not impregnated with thermosetting resin. The portion which is not impregnated means a portion of reinforcing fiber without thermosetting resin attached. The portion of prepreg without impregnation can be well impregnated with thermosetting resin through a compression forming such as press forming to exhibit desirable characteristics.

The reinforcing fiber constituting the prepreg may be carbon fiber, glass fiber, aramid fiber, alumina fiber, silicon carbide fiber, boron fiber, metal fiber, natural fiber, mineral fiber or the like, or combination of one or more kinds thereof.

Above all, it is preferable to employ a PAN-based, pitch-based or rayon based carbon fiber from viewpoints of high specific strength, high specific rigidity and light weight. From a viewpoint of enhanced electric conductivity of shaped product, it is possible to employ a reinforcing fiber coated with metal such as nickel, copper and ytterbium.

(Thermosetting resin)

The thermosetting resin constituting the prepreg may be a resin of unsaturated polyester, vinyl ester, epoxy, phenol, urea melamine, maleimide, polyimide or the like, or alternatively a copolymer or a modification thereof, or a resin blend of at least two kinds thereof. Above all, it is preferable to employ epoxy resin from a viewpoint of mechanical characteristics of shaped product. It is preferable that the thermosetting resin has a glass transition temperature of 80°C or less because the prepreg is cured in a forming process. The glass transition temperature is preferably 70°C or less, preferably 60°C or less.

(Tucked portion)

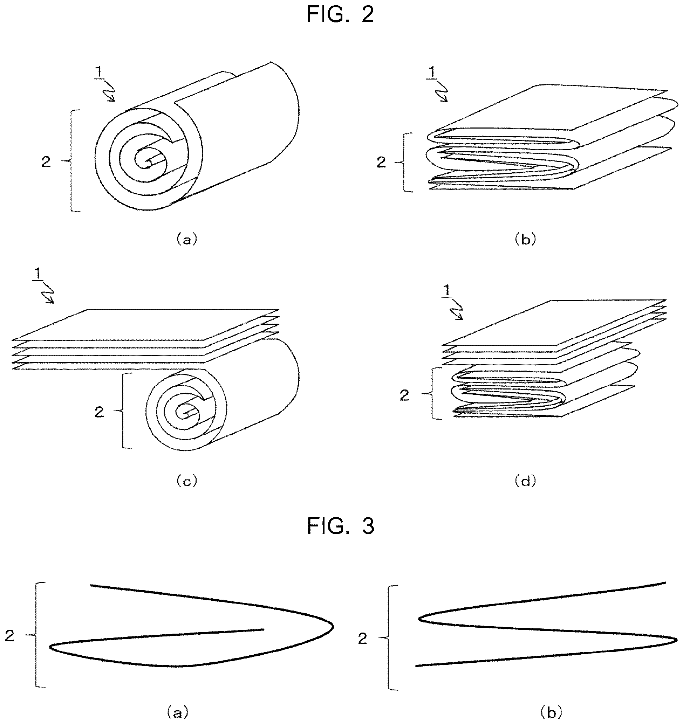

Our preform element has a tucked portion of prepreg. The tucked portion means a portion where two or more prepreg layers are connected continuously by folding a sheet of prepreg. The tucked portion is not included in generally available laminate bodies, in which prepreg layers are not connected to each other but cutout prepregs are stacked in the thickness direction. Fig. 2 shows an example of tucked portion. Conventional prepreg as a preform element can easily be extended in fiber orthogonal direction 11b by compression to the surface. On the other hand, it can hardly be extended in the fiber direction. Our preform element has each layer of tucked portion 2 of preform element 1, the layer being capable of shifting in the folding direction and the longitudinal direction of folding by pressurization at the compression forming. Accordingly, the prepreg can exhibit extension in the fiber direction as well as fiber orthogonal direction 11b.

The incised prepreg has an incised part capable of opening and shifting in addition to the above-described deformation to improve extension in the fiber direction. Such a whole structure of prepreg capable of flowing can place reinforcing fibers into edges to reduce regions of excessive resin so that a shaped product excellent in mechanical characteristics and appearance is produced.

It is preferable that the preform element has a thickness of 1 mm or more and 100 mm or less, and the thickness is preferably 5 mm or more and 80 mm or less, preferably 10 mm or more and 50 mm or less. The thickness within the preferable range makes it easy to transfer heat uniformly inside the preform element to produce a shaped product excellent in appearance.

It is preferable that the tucked portion has a scroll structure at least partially as shown in Fig. 3 (a) since such a structure can easily produce the preform element of which thickness is adjustable. The thickness of preform element 1 provided with tucked portion 2 having the scroll structure can easily be increased. Because a thick preform element requires a long time for mold-clamping pressurization, the preform element has a long flowing distance to make it easy to fill materials. Further, when the thickness of the preform element is set in the preferable range, heat transfer can be performed uniformly inside the preform element to produce a shaped product excellent in appearance. The scroll structure may be made by rolling up a sheet of prepreg sequentially from the edge. It may be made by rolling up a folded prepreg. Alternatively, the scroll structure may be made by applying the same method to a laminate of a plurality of prepreg sheets.

It is preferable that the tucked portion has a folded structure at least partially as shown in Fig. 3 (b) since such a structure can easily produce the preform element of which thickness is adjustable. The thickness of preform element 1 provided with tucked portion 2 having the folded structure can easily be decreased. Because a thin preform element has little variation of thickness even by mold-clamping so that disturbance of fibers is suppressed, a shaped product excellent in mechanical characteristics is produced. Further, when the thickness of the preform element is set in the preferable range, heat transfer can be performed uniformly inside the preform element to produce a shaped product excellent in appearance.

The folded structure may be made by folding a sheet of prepreg in two or three, and further folding it. Alternatively, it may be made by folding a thin scroll structure of a sheet of prepreg having a flat cross section. Further alternatively, the folded structure may be made by applying the same method to a laminate of a plurality of prepreg sheets.

The tucked portion may have a cross section of approximate circle, flat shape or polygon such as triangle and quadrangle. The cross section can be selected properly according to the shaped product when thickness and width of preform element are designed. The scroll structure may be solid or hollow. The solid scroll structure can suppress generating voids in shaped products while the hollow scroll structure allows a thicker preform and improves filling characteristics of material.

It is preferable that reinforcing fibers in the tucked portion are oriented along approximately the same direction. The reinforcing fibers oriented along approximately the same direction can improve rigidity in the fiber direction of preform element to produce a shaped product provided with a thick part having an improved reinforcement effect.

Our preform element having the tucked portion is provided with a reinforcing fiber layer oriented along the thickness direction while conventional laminates don't have such a layer. Our preform element having a reinforcing fiber layer oriented in the three-dimensional directions can promote material flow of both in-plane and out-of-plane at a press forming to make it easy to form a shape such as rib protruding in the thickness direction. Further, the reinforcing fiber layer oriented in the thickness direction contributes to improve mechanical characteristics of shaped product made from our preform element.

It is preferable that the tucked portion has 4 or more of prepreg layers, preferably having 8 or more of prepreg layers, further preferably having 16 or more prepreg layers. In a general compression forming, the preform element flows inside more greatly than the surface thereof because of friction between molding die and molding material. The preform element provided with at least 4 prepreg layers in the tucked portion can flow inside to exhibit good fluidity and filling characteristics even when the surface layer hardly flows.

The preform element having the tucked portion can be bent in the longitudinal direction or deformed in a cross section by tucking therein by fingers when it is placed in a mold cavity. Our preform element capable of deforming according to cavity shape can enhance the fluidity at the forming process to produce a high-quality shaped product.

[Preform]

A product having a three-dimensional complicated shape is generally formed from a suitable preform made by laminating a plurality of prepregs cut into a desirable shape or combining laminates. However, many sheets of prepreg are required to laminate thick parts of product while it takes a long time to prepare a preform because a thick laminate is difficult to be formed into a three-dimensional shape. Further, production cost has been increased to produce an integrated shaped product having a three-dimensional shape from a combination of laminates by using dedicated positioning tools and shaping tools.

Our preform comprises a prepreg laminate and a preform element having a tucked portion of prepreg.

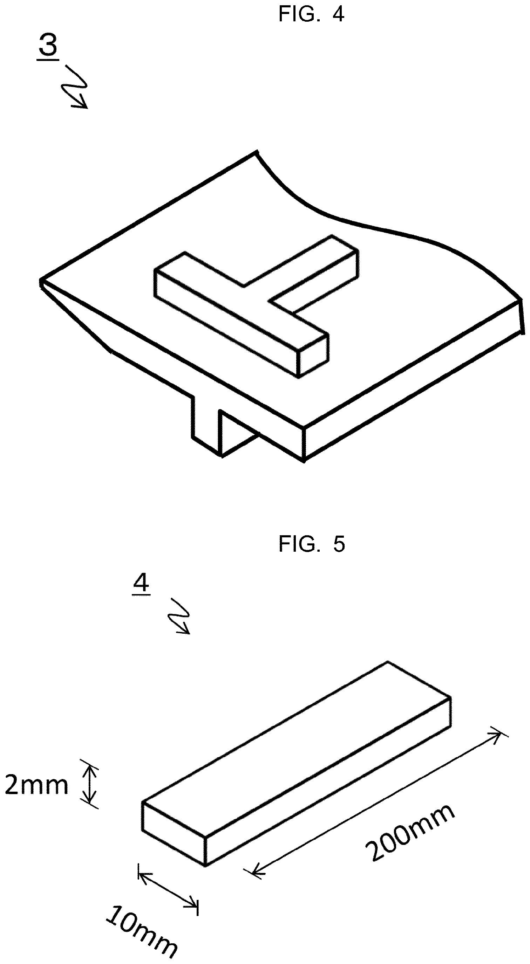

It is preferable that the preform is made from a prepreg laminate and a preform element having a tucked portion provided at a predetermined position of the prepreg laminate, so that a complicated shaped product is produced as being reinforced. It is preferable that the prepreg laminate is provided at a thickness-changing position such as thick part or projection of product so that shaped product 3 shown in Fig. 4 having thickness changing shape such as thick part and projection is produced easily.

In the preform comprising the prepreg laminate and the preform element having the tucked portion, it is preferable that the preform element being provided at least on one surface of the prepreg laminate. With such a preform, a complicated part is formed by mold-clamping to flow the preform element having the tucked portion before the prepreg laminate starts flowing, so that a complicated shaped product while reinforcing fibers included in the prepreg laminate are prevented from being disturbed. Accordingly, a shaped product excellent in mechanical characteristics can be produced.

In the preform comprising the prepreg laminate and the preform element having the tucked portion, it is preferable that the preform element being partially covered and provided at least on one surface of the prepreg laminate. With such a preform, the preform element comprising the prepreg laminate and the tucked portion is provided with a smoothly formed junction capable of suppressing resin sink on the surface of junction so that appearance quality is maintained.

In the preform comprising the prepreg laminate and the preform element having the tucked portion, it is preferable that the prepreg laminate is preliminarily formed into a three-dimensional shape. With such a preform having a shape similar to the mold cavity, flow of the prepreg laminate is suppressed at the time of press forming so that reinforcing fibers included in the prepreg laminate are prevented from being disturbed to produce a shaped product excellent in mechanical characteristics. Further, such a preform having a shape similar to the product shape can be easily placed in the mold cavity.

It is preferable that the prepreg laminate is fixed to the preform element having the tucked portion. With such a configuration, handleability is good in a delivering process of preform or a placement process of preform into the mold cavity while relative positional relation between the prepreg and the preform element having the tucked portion is maintained over processes. Thus the mold cavity has a proper charging rate of each portion to improve the yield of shaped products.

The fixation may be achieved with pressure by using the tuck of prepreg, or alternatively be achieved by a vibration welding or an ultrasonic welding.

It is preferable that the prepreg laminate and the preform element having the tucked portion comprise the same resin, so that the integrated junction is prevented from reducing strength and shaped product excellent in mechanical characteristics and appearance quality.

In the preform comprising the prepreg laminate and the preform element having the tucked portion, it is preferable that a mass (W1 [g]) of prepreg laminate is equal to or more than a mass (W2 [g]) of preform element having the tucked portion as shown in relational formula of $W1 \geq W2$. With such a configuration, reinforcing fibers included in the prepreg laminate are prevented from being disturbed to produce a shaped product excellent in mechanical characteristics.

In the preform comprising the prepreg laminate and the preform element having the tucked portion, it is preferable that a cure extent ($\alpha$1 [%]) of prepreg laminate is equal to or more than a cure extent ($\alpha$2 [%]) of preform element having the tucked portion as shown in relational formula of $\alpha1 \geq \alpha2$. It is further preferable that the cure content ($\alpha$1 [%]) of prepreg laminate is 0.5% or more and 30% or less. Too low cure extent might easily deform the preform in handling to deteriorate the accuracy of placement in a mold. The cure extent of the preferable lower limit or more can improve the accuracy of preform placement. Too high cure extent might make thermosetting resin gelate with pressure of press forming to exhibit insufficient flowability before starting the preform flow. The cure extent of the preferable upper limit or less can exhibit sufficient flowability of preform at the forming process. When a cure extent ($\alpha$1 [%]) of prepreg laminate is equal to or more than a cure extent ($\alpha$2 [%]), reinforcing fibers included in the prepreg laminate are prevented from being disturbed to produce a shaped product excellent in mechanical characteristics.

The cure extent can be determined with a differential scanning calorimeter by comparing calorific values before and after the reaction. Cure extent $\alpha$ [%] is determined by the following formula, where H0 [J] is calorific value of prepreg having 0% of cure extent and H1 [J] is calorific value of prepreg to be determined.

$$\alpha = \{(H0\text{-}H1) / H0\} \times 100$$

It is preferable that the prepreg laminate and the preform element having the tucked portion are integrated by a press forming, wherein the prepreg laminate and the preform element having the tucked portion are arranged to contact each other at the mold-clamping process.

From a viewpoint of improved design of shaped product, it is preferable that at least one selected from a group of decoration film, transparent film and color film is attached to a surface of the preform element and/or the preform. It is preferable that the decoration film has a design and/or a geometric pattern on the film surface. It is preferable that the transparent film has a visible light transmittance of 80 to 100%. It is preferable that the color film contains an organic-based and/or an inorganic-based pigment or colorant. It is possible that a film, such as luster film, print film, antistatic film, shading film and heat-resistant film, is attached thereto as needed.

Shaped products made from our preform element and/or preform may be used as an electrical or electronic device component of housing, tray, chassis, interior member or case, such as "personal computer, display, office automation equipment, cell-phone, handheld terminal, facsimile, compact disk, portable MD, portable radio-cassette recorder, PDA (personal digital assistant such as electronic note), video camera, digital video camera, optical device, audio system, air-conditioner, lighting apparatus, amusement article, toy article and a home electric appliance", a civil engineering or building component, such as "pillar, panel and reinforcing member", an automobile or a two-wheel vehicle structural part of suspension, accelerator or steering, such as "member, frame, hinge, arm, axle shaft, wheel bearing, beam, propeller shaft, wheel and gearbox", an automobile or a two-wheel vehicle structural part of outer panel or body, such as "hood, roof, door, fender, trunk lid, side panel, rear end panel, upper back panel, front body, underbody, pillar, member, frame, beam, support, rail and hinge", an automobile or a two-wheel vehicle structural part of exterior, such as "bumper, bumper beam, molding, undercover, engine cover, straightening plate, spoiler, cowl louver, and aero part", an automobile or a two-wheel vehicle structural part of interior, such as "instrument panel, seat frame, door trim, pillar trim, steering wheel and module", an automobile or a two-wheel vehicle structural part of fuel system, exhaust system or intake system, such as "motor part, CNG tank, gas tank, fuel pump, air intake, intake manifold, carburetor main body, carburetor spacer, piping and valve", an automobile or a two-wheel vehicle structural part, such as "alternator terminal, alternator connector, IC regulator, potentiometer base for light dimmer, engine coolant joint, thermostat base for air-conditioner, heating warm air flow control valve, brush holder for radiator motor, turbine vane, wiper motor part, distributor, starter switch, starter relay, window washer nozzle, air-conditioner panel switch board, coil for fuel-related electromagnetic valve, battery tray, AT bracket, head lamp support, pedal housing, protector, horn terminal, step motor rotor, lamp socket, lamp reflector, lamp housing, brake piston, noise shield, spare tire cover, solenoid bobbin, engine oil filter, ignition device case, scuff plate and fascia", or an airplane component, such as "landing gear pod, winglet, spoiler, edge, ladder, elevator, fairing and rib".

From a viewpoint of mechanical characteristics, it is preferable that the shaped product made from our preform element is used as an electric or electronic device housing, a civil engineering or building panel, an automobile structural part or an airplane component.

[Examples]

Hereinafter, examples of our preform element and/or preform and shaped products thereof will be explained in details. The following items are evaluated In Examples.

(1) Dimension of preform element:

Thickness, width and length of preform element are measured by 1mm unit with a vernier caliper.

(2) Cure extent of preform element or preform:

Samples of 20mg are cut from a preform element and a prepreg laminate constituting the preform element or preform to determine calorific value H1 [J] with a differential scanning calorimeter. Next, calorific value H0 [J] at 0% of cure extent of prepreg is determined to calculate cure extent $\alpha$ [%] according to the following formula.

$$\alpha = \{(H0-H1) / H0\} \times 100$$

(3) Filling characteristics of shaped product:

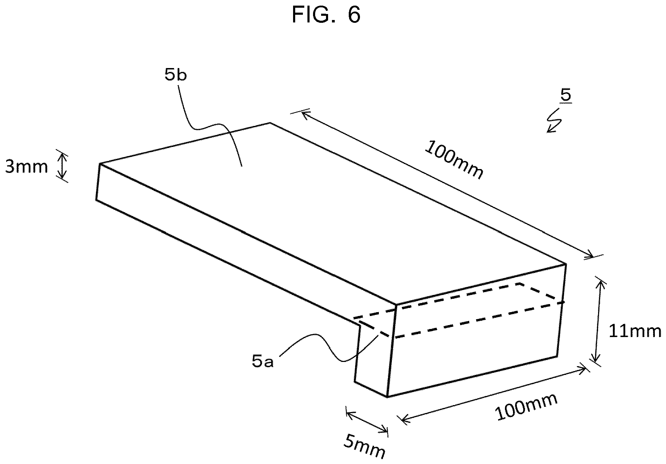

A preform element and preform are subjected to a press forming with mold (1) and mold (2) having mold cavities shown in Figs. 5 and 6. A cross section of end part of shaped product is polished to be observed to evaluate filling characteristics according to the following standard. ◎(Excellent) and ○(Good) are evaluated as "pass".

◎(Excellent): No defect derived from insufficient filling is observed for the shaped product containing both reinforcing fibers and thermosetting resin in the end part.
○(Good): No defect derived from insufficient filling is observed for the shaped product containing only thermosetting resin in the end part.
×(No good): Defects derived from insufficient filling are observed for the shaped product.

(4) Appearance quality of shaped product:

Appearance quality is evaluated as ○(Good) for invisible unevenness and is evaluated as ×(No good) for visible unevenness. It is evaluated as ×(No good) for either yellowing derived from defective forming or unevenness derived from rich resin. ○ (Good) is evaluated as "pass".
The following prepreg is used in Examples.

[Prepreg]

A unidirectional prepreg P3252S-20 (made by Toray Industries, Inc.) is employed. This prepreg, which may be called prepreg (A) hereinafter, has the following characteristics.

- Carbon fiber density: 1.80 g/cm$^3$
- Carbon fiber tensile strength: 4.9GPa
- Carbon fiber tensile elastic modulus: 230GPa
- Yarn basis weight: 200
- Resin content: 33%
- Thickness: 0.19mm

[Incised prepreg]

Notches are inserted into prepreg (A) with an automatic cutter to make an incised prepreg. Characteristics except for the notch are the same as the above-described unidirectional prepreg. The incised prepreg may be called prepreg (B) hereinafter.

[Example using only a preform element having a tucked portion]

(Example 1)

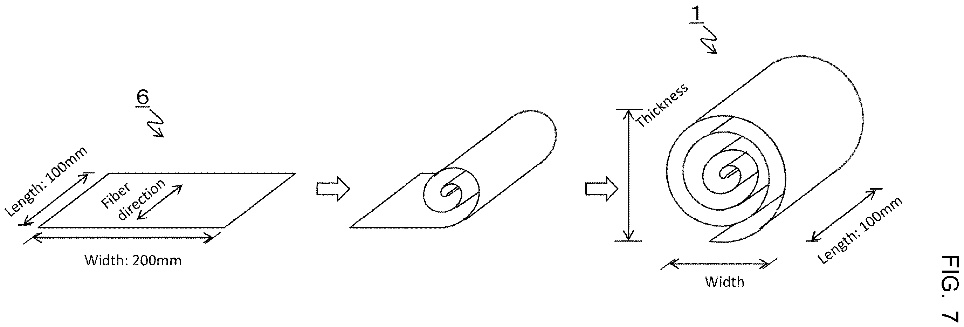

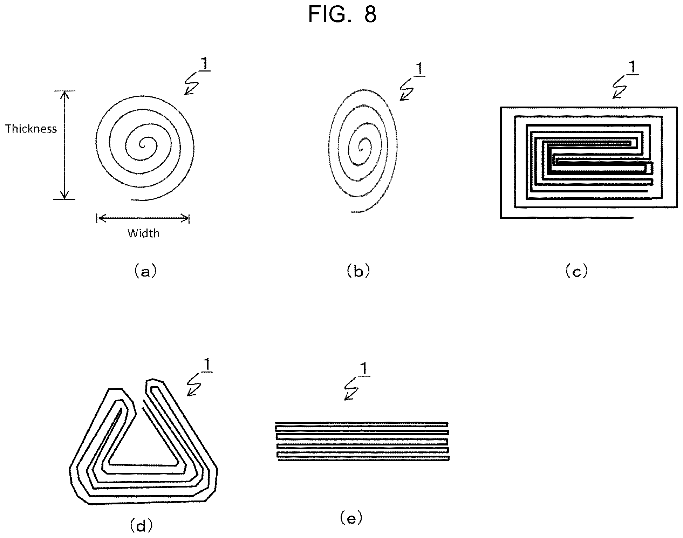

As shown in Fig. 7, prepreg (B), which had been cut into two sheets of 100mm in length x 200mm in width as aligning the length direction with the main axis direction of reinforcing fibers, was rolled up from the end part along the width direction to produce two pieces of preform elements (1) having 100mm length and an approximately circular cross section as shown in Fig. 8 (a). Preform elements (1) had a tucked portion of scroll structure in which reinforcing fibers were oriented in the length direction of the preform element. One of provided preform elements (1) was subjected to a measurement of dimension and cure extent according to the above-described method. The rest of the provided preform elements (1) was placed at the center of cavity in mold (1) adjusted at 150°C. Then, the upper and lower molds were approached to each other to heat the preform element being pressurized at 10MPa for 10min in the mold to produce a shaped product. Table 1 shows evaluation results of cure extent, filling characteristics of shaped products and surface appearance of shaped products.

(Example 2)

Prepreg (B) cut similarly to Example 1 was being pressed in the thickness direction while being rolled up from the end part along the width direction to produce preform elements (2) having an ellipsoidal cross section as shown in Fig. 8 (b). Preform elements (2) had a tucked portion of scroll structure in which reinforcing fibers were oriented in the length direction of the preform element. Then, preform element (2) was heated in an oven at 80°C for a while. And then, preform element (2) was subjected to a measurement of dimension and cure extent and a forming process according to the same method as Example 1. Table 1 shows evaluation results of cure extent, filling characteristics of shaped products and surface appearance of shaped products.

(Example 3)

After prepreg (B) was cut similarly to Example 1, a part of 150mm width was folded in two for 4 times, around which the residual part of 50mm width was wound to produce preform elements (3) having a quadrangular cross section as shown in Fig. 8 (c). Preform elements (3) had a tucked portion of folded structure and scroll structure in which reinforcing fibers were oriented in the length direction of the preform element. Then, preform element (3) was heated in an oven at 80°C for a while. And then, preform element (3) was subjected to a measurement of dimension and cure extent and a forming process according to the same method as Example 1. Table 1 shows evaluation results of cure extent, filling characteristics of shaped products and surface appearance of shaped products.

(Example 4)

Prepreg (B) cut similarly to Example 1 was folded in two in the width direction and successively folded in three, and was further folded in three so that the folded ends contacted each other to produce preform elements (4) having a triangular cross section as shown in Fig. 8 (d). Preform elements (4) had a tucked portion of folded structure in which reinforcing fibers were oriented in the length direction of the preform element. Then, preform element (4) was heated in an oven at 80°C for a while. And then, preform element (4) was subjected to a measurement of dimension and cure extent and a forming process according to the same method as Example 1. Table 1 shows evaluation results of cure extent, filling characteristics of shaped products and surface appearance of shaped products.

(Example 5)

Prepreg (A), which had been cut into two sheets of 200mm in length x 100mm in width as aligning the length direction with the main axis direction of reinforcing fibers, was tucked by a part of 10mm width from the end part and then was reversed and was successively tucked by another part of 10mm width, so that preform elements (5) having a flat cross section as shown in Fig. 8 (e) were produced by repetitive folding described above. Preform elements (5) had a tucked portion of folded structure in which reinforcing fibers were oriented in the length direction of the preform element. And then, preform element (5) was subjected to a measurement of dimension and cure extent and a forming process according to the same method as Example 1. Table 1 shows evaluation results of cure extent, filling characteristics of shaped products and surface appearance of shaped products.

(Comparative example 1)

Prepreg (A), which had been cut into 20 sheets of 100mm in length x 10mm in width as aligning the length direction with the main axis direction of reinforcing fibers, was laminated in the thickness direction to produce a laminate having thickness of 4mm, width of 10mm and length of 100mm. The laminate was subjected to a forming process according to the same method as Example 1. Table 1 shows evaluation results of cure extent, filling characteristics of shaped products and surface appearance of shaped products.

(Comparative example 2)

After prepreg (B) was cut similarly to Example 1, a part of 150mm width was folded in two for 4 times, around which the residual part of 50mm width was wound to produce preform elements (C-2) having a quadrangular cross section. Preform elements (C-2) had a tucked portion of folded structure and scroll structure in which reinforcing fibers were oriented in the length direction of the preform element. Then, preform element (C-2) was heated in an oven at 80°C for a while. And then, preform element (C-2) was subjected to a measurement of dimension and cure extent and a forming process according to the same method as Example 1. Table 1 shows evaluation results of cure extent, filling characteristics of shaped products and surface appearance of shaped products.

[Table 1]

| | Example 1 | Example 2 | Example 3 | Example 4 | Example 5 | Comparative example 1 | Comparative example 2 |
|---|---|---|---|---|---|---|---|
| Prepreg | B | B | B | B | A | A | B |
| Structure of tucked portion | Scroll structure | Scroll structure | Folded structure/ Scroll structure | Folded structure | Folded structure | - | Scroll structure |
| Layer number of prepreg with tucked portion | 36 | 36 | 20 | 12 | 10 | - | 20 |
| Cross section shape | Circle | Ellipse | Quadrangle | Triangle | Flat shape | Quadrangle | Quadrangle |
| Fiber direction | Unidirectional | Unidirectional | Unidirectional | Unidirectional | Unidirectional | Unidirectional | Unidirectional |
| Thickness [mm] | 8 | 11 | 5 | 9 | 2 | 4 | 17 |
| Width [mm] | 8 | 6 | 10 | 10 | 10 | 10 | 17 |
| $\alpha 2$ [%] | 0.5 | 5 | 10 | 20 | 1 | 1 | 40 |
| Filling characteristics | ◎(Excellent) | ◎(Excellent) | ◎(Excellent) | ○(Good) | ◎(Excellent) | ×(No good) | ×(No good) |
| Appearance quality | ○(Good) | ○(Good) | ○(Good) | O(Good) | ○(Good) | ×(No good) | ×(No good) |

[Examples using a preform]

(Example 6)

Prepreg (A), which had been cut into each of 8 sheets of 100mm in length x 100mm in width as orienting the length direction by 0°, ±45° and 90° from the main axis direction of reinforcing fibers, was laminated with laminated constitution of [45/0/-45/90]$_{2s}$ to produce two sheets of prepreg laminate (6). Further, two pieces of preform element (6) were produced in the same method as Example 1. Prepreg laminate (6) and a piece of provided preform elements (6) were subjected to a measurement of dimension and cure extent according to the above-described method. The rest of provided preform elements (6) was placed on placement portion 5a shown with broken lines in Fig. 6 in mold (2) adjusted at 150°C while prepreg laminate (6) was placed in the mold cavity to produce a preform. Then, the upper and lower molds were approached to each other to heat the preform being pressurized at 5MPa for 10min in the mold to produce a shaped product. Table 2 shows evaluation results of cure extent, filling characteristics of shaped products and surface appearance of shaped products.

(Example 7)

A prepreg, which had been cut in the same method as Example 6, was laminated with laminated constitution of [0/-45/90/(45/0/-45/90)$_s$/(90/-45/0/45)] to produce prepreg laminate (7). Further, preform elements (7) were produced in the same method as Example 2. Then, preform element (7) was placed on the surface layer (0°) of prepreg laminate (7), on which a sheet of prepreg of 100mm in length x 100mm in width was laminated as orienting the length direction by 45° from the main axis direction of reinforcing fibers. Thus provided preform was heated in an oven at 80°C for a while. And then, the preform was subjected to a measurement of dimension and cure extent and a forming process according to the same method as Example 6. Table 2 shows evaluation results of cure extent, filling characteristics of shaped products and surface appearance of shaped products.

(Example 8)

Prepreg laminate (8) was produced by the same method as Example 6. Further, preform element (8) was produced by the same method as Example 3. Then, the provided laminate was placed still in a cavity of mold (2) adjusted at 60°C. Then, the upper and lower molds were approached to each other to heat the laminate being pressurized for a while in the mold to produce a preliminary shaped prepreg laminate. And then, the laminate and the preform element were combined to make a preform in the same method as Example 6 to be subjected to a forming process. Table 2 shows evaluation results of cure extent, filling characteristics of shaped products and surface appearance of shaped products.

(Comparative example 3)

Two sheets of prepreg laminate were produced by the same method as Example 6. Further, each of a sheet of prepreg of 100mm in length x 100mm in width was laminated on the top and bottom layer of each laminate plate as aligning the length direction with the main axis direction of reinforcing fibers to produce two sheets of laminate (C-3). After one of provided laminate (C-3) was subjected to a measurement of dimension and cure extent according to the above-described method, the other laminate (C-3) was placed in mold (2) adjusted at 150°C to produce a preform. Then, the upper and lower molds were approached to each other to heat the preform being pressurized for 5min in the mold to produce a shaped product. Table 2 shows evaluation results of cure extent, filling characteristics of shaped products and surface appearance of shaped products.

(Comparative example 4)

Prepreg laminate (C-4) was produced by the same method as Example 6. Further, preform element (C-4) was produced by the same method as Example 1. Then, provided laminate (C-4) was heated in an oven at 80°C for a while. And then, the laminate and the preform element were combined to make a preform in the same method as Example 6 to be subjected to a forming process. Table 2 shows evaluation results of cure extent, filling characteristics of shaped products and surface appearance of shaped products.

(Comparative example 5)

Prepreg (A), which had been cut into each of 8 sheets of 50mm in length x 100mm in width as orienting the length direction by 0°, ±45° and 90° from the main axis direction of reinforcing fibers, was laminated with laminated constitution of [45/0/-45/90]$_{2s}$ to produce two sheets of prepreg laminate (C-5). Further, prepreg (B), which had been cut into two sheets of 100mm in length x 1,000mm in width, was rolled up from the end part along the width direction to produce two pieces of preform elements (C-5) having an approximately circular cross section. Besides, the length direction was aligned with the main axis direction of reinforcing fibers contained in the prepreg. Each of provided prepreg laminate (C-5) and preform element (C-5) were subjected to a measurement of dimension and cure extent according to the above-described method. The rest of provided preform elements (C-5) was placed on placement portion 5a shown with broken lines in Fig. 6 in mold (2) adjusted at 150°C while prepreg laminate (C-5) was placed in the mold cavity to produce a preform. Then, the upper and lower molds were approached to each other to heat the preform being pressurized for 5min in the mold to produce a shaped product. Table 2 shows evaluation results of cure extent, filling characteristics of shaped products and surface appearance of shaped products.

[Table 2]

| | Example 6 | Example 7 | Example 8 | Comparative example 3 | Comparative example 4 | Comparative example 5 |
|---|---|---|---|---|---|---|
| Prepreg | B | B | B | - | B | B |
| Structure of tucked portion | Scroll structure | Scroll structure | Folded structure /Scroll structure | None | Scroll structure | Scroll structure |
| Layer number of prepreg with tucked portion | 36 | 36 | 20 | - | 36 | 80 |
| Cross section shape | Circle | Ellipse | Quadrangle | - | Circle | Circle |
| Fiber direction | Unidirectional | Unidirectional | Unidirectional | - | Unidirectional | Unidirectional |
| Thickness [mm] | 8 | 11 | 5 | 3 | 8 | 17 |
| Width [mm] | 8 | 6 | 10 | 10 | 8 | 17 |
| Preform thickness [mm] | 11 | 14 | 8 | 3 | 11 | 20 |
| $\alpha 1$ [%] | 0.5 | 5 | 10 | 1 | 40 | 1 |
| $\alpha 2$ [%] | 0.5 | 5 | 1 | 1 | 1 | 1 |
| W2 [g] / W1 [g] | 0.125 | 0.125 | 0.125 | 0 | 0.125 | 1.25 |
| Filling characteristics | ◎(Excellent) | ◎(Excellent) | ◎(Excellent) | ×(No good) | ×(No good) | ○(Good) |
| Appearance quality | ○(Good) | ○(Good) | ○(Good) | ×(No good) | ×(No good) | ×(No good) |

As shown in Table 1, the shaped products produced in Examples 1 to 5 had no defect even in the end part and were excellent in appearance quality and mechanical characteristics with a little void and a little resin-rich area because the preform element provided with a tucked portion having a proper cure extent exhibited a good flowing. On the other hand, the shaped products produced in Comparative examples 1 and 2 had a defect in the end part and were poor in appearance quality with a large resin-rich area because the preform element which was not provided with a tucked portion or which was provided with a tucked portion having improper cure extent exhibited a suppressed flowing.

As shown in Table 2, the shaped products produced in Examples 6 to 8 had no defect even in the end part and were excellent in appearance quality and mechanical characteristics with a little void and a little resin-rich area because combination of the prepreg laminate and the preform element provided with a tucked portion having a proper cure extent exhibited a good flowing. On the other hand, the shaped product produced in Comparative example 3 had a large defect in the end part and was poor in appearance quality with a large resin-rich area because only the laminate was shaped without using a preform element with a tucked portion so that the flowing was suppressed. Further, the shaped product produced in Comparative example 4 had warpage and was poor in appearance quality because the preform element with a tucked portion was heavier than the laminate so that the preform flowed greatly even in flat part 5b.

Industrial Applications of the Invention

Our invention is widely applicable to produce a preform for forming automobile structural members, aircraft members, sport tools or the like.

Explanation of symbols

1: preform element
2: tucked portion
3: shaped product
4, 5: cavity
5a: placement portion
5b: flat part
6: prepreg
11: reinforcing fiber
11a: main shaft direction of reinforcing fibers
11b : fiber orthogonal direction
12: notch
L: length of reinforcing fiber
Ws: cut length projected in fiber orthogonal direction
Wt: cut length
$\theta$: angle between notch and fiber direction

## Claims

1. A preform element having a tucked portion in a part of a prepreg comprising a reinforcing fiber and a thermosetting resin.

2. The preform element according to claim 1, wherein the prepreg is an incised prepreg made by partially inserting a notch in the prepreg.

3. The preform element according to claim 1 or 2, wherein a part of the tucked portion has a scroll structure.

4. The preform element according to any one of claims 1 to 3, wherein a part of the tucked portion has a folded structure.

5. The preform element according to any one of claims 1 to 4, wherein the reinforcing fibers are unidirectionally oriented in the tucked portion.

6. The preform element according to any one of claims 1 to 5, wherein four or more layers of the prepreg are laminated in the tucked portion.

7. A preform comprising:

   a preform element having a tucked portion in a part of a first prepreg comprising a reinforcing fiber and a thermosetting resin; and
   a second prepreg comprising a reinforcing fiber and a thermosetting resin,
   the preform element being provided at a position in a laminate of the second prepreg.

8. The preform according to claim 7, wherein at least one of the preform element is provided on a surface of the laminate of the second prepreg.

9. The preform according to claim 7 or 8, wherein at least a part of the preform element is covered by the laminate of the second prepreg.

10. The preform according to any one of claims 7 to 9, wherein the laminate of the second prepreg has a three-dimensional shape.

11. The preform according to any one of claims 7 to 10, wherein a mass (W1) of the laminate of the second prepreg is equal to or more than a mass (W2) of the preform element.

12. The preform according to any one of claims 7 to 11, wherein a cure extent ($\alpha$1) of the laminate of the second prepreg is equal to or more than a cure extent ($\alpha$2) of the preform element.

13. The preform according to any one of claims 7 to 12, wherein the cure extent ($\alpha$1) of the laminate of the second prepreg is 0.5% or more and 30% or less.

14. A method for producing a preform comprising a bonding step to attach a preform element having a tucked portion in a first prepreg comprising a reinforcing fiber and a thermosetting resin to a surface of a laminate of a second prepreg comprising a reinforcing fiber and a thermosetting resin.

15. The method for producing a preform according to claim 14, further comprising a covering step to cover at least a part of the preform element by the laminate of the second prepreg.

16. The method for producing a preform according to claim 14 or 15, further comprising a preliminary forming step to form the laminate of the second prepreg into a three-dimensional shape.

FIG. 1

FIG. 2

(a)

(b)

(c)

(d)

FIG. 3

(a)

(b)

FIG. 4

3

FIG. 5

4

2mm

200mm

10mm

## FIG. 6

5b

3mm

100mm

5

11mm

5a

5mm

100mm

FIG. 7

Length: 100mm

Width

Thickness

1

6

Fiber direction

Width: 200mm

Length: 100mm

# FIG. 8

Thickness

Width

(a)

(b)

(c)

(d)

(e)

**INTERNATIONAL SEARCH REPORT**

| International application No. |
| --- |
| PCT/JP2018/004206 |

A. CLASSIFICATION OF SUBJECT MATTER
Int.Cl. B29B11/16(2006.01)i, B29K101/10(2006.01)n
According to International Patent Classification (IPC) or to both national classification and IPC

B. FIELDS SEARCHED

Minimum documentation searched (classification system followed by classification symbols)
Int.Cl. B29B11/16;15/08-15/14, C08J5/04-5/10;5/24, B32B1/00-43/00,
 B29C70/00-70/88, B29C43/00-43/58, B64B1/00-1/70, B64C1/00-99/00,
 B64D1/00-47/08, B64F1/00-5/00, B29K101/10

Documentation searched other than minimum documentation to the extent that such documents are included in the fields searched
 Published examined utility model applications of Japan 1922-1996
 Published unexamined utility model applications of Japan 1971-2018
 Registered utility model specifications of Japan 1996-2018
 Published registered utility model applications of Japan 1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 6-091770 A (TOYOTA MOTOR CORP.) 05 April 1994, entire text, in particular, claims, paragraphs [0017]-[0020], fig. 1-6 (Family: none) | 1, 3, 6, 7, 10-13 |
| X | JP 8-074970 A (TOYOTA MOTOR CORP.) 19 March 1996, entire text, in particular, paragraphs [0039]-[0041], fig. 1-6 (Family: none) | 1, 3, 6, 7, 10-13 |
| X | Microfilm of the specification and drawings annexed to the request of Japanese Utility Model Application No. 180739/1980 (Laid-open No. 102536/1982) (MITSUBISHI RAYON CO., LTD.) 24 June 1982, entire text, in particular, claims, specification, pages 3-4, fig. 3-5 (Family: none) | 1, 2, 4 |

☒ Further documents are listed in the continuation of Box C.    ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 27 March 2018 (27.03.2018) | 03 April 2018 (03.04.2018) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2018/004206 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 11-156952 A (THERMOSETER CO., LTD.) 15 June 1999, entire text, in particular, claims, paragraphs [0026]-[0033], fig. 1-3 (Family: none) | 1, 3, 6 |
| X | JP 58-059820 A (MITSUBISHI RAYON CO., LTD.) 09 April 1983, entire text, in particular, claims, page 2, upper left column to page 3, upper left column, fig. 2-4 (Family: none) | 1, 4-6 |
| A | JP 2012-530807 A (DOW GLOBAL TECHNOLOGIES LLC.) 06 December 2012, entire text & US 2012/0083564 A1 & WO 2011/005420 A1 & EP 2445949 A1 & TW 201100458 A & SG 176923 A & KR 10-2012-0040153 A & CN 102803335 A & CN 106832224 A | 1-16 |
| A | JP 2007-504962 A (EGAN, Joseph, Steven) 08 March 2007, entire text & US 2007/0100465 A1 & WO 2004/113058 A1 & EP 1644181 A1 & CA 2530990 A & CN 1819911 A & NZ 544769 A & BR 318372 A & KR 10-2009-0132643 A & IL 172716 A & AU 2003240304 A & KR 10-0980531 B1 | 1-16 |
| A | JP 4-164611 A (SUMITOMO BAKELITE CO., LTD.) 10 June 1992, entire text (Family: none) | 1-16 |
| A | JP 2010-030193 A (TORAY INDUSTRIES, INC.) 12 February 2010, entire text (Family: none) | 1-16 |
| A | WO 2008/038429 A1 (TORAY INDUSTRIES, INC.) 03 April 2008, entire text & US 2010/0028616 A1 & EP 2067615 A1 & KR 10-2009-0071537 A & CN 101516613 A & TW 200815183 A & ES 2606394 T | 1-16 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015143343 A
- JP 5950149 B